# EUROPÄISCHE PATENTSCHRIFT

(11) **EP 4 187 345 B1**
(45) Veröffentlichungstag und Bekanntmachung des Hinweises auf die Patenterteilung: **12.02.2025**
(21) Anmeldenummer: 22208512.8
(22) Anmeldetag: 21.11.2022
(51) Int. Cl.: G05D 1/00, G01C 21/34

(54) **VERFAHREN ZUM PLANEN EINER ROUTE FÜR EIN FAHRERLOSES TRANSPORTFAHRZEUG**
METHOD FOR PLANNING A ROUTE FOR A DRIVERLESS TRANSPORT VEHICLE
PROCÉDÉ DE PLANIFICATION D'UNE ROUTE POUR UN VÉHICULE DE TRANSPORT SANS CONDUCTEUR

(30) Priorität: 25.11.2021 DE 102021130984
(43) Veröffentlichungstag der Anmeldung: 31.05.2023
(73) Patentinhaber: Jungheinrich Aktiengesellschaft, 22047 Hamburg (DE)
(72) Erfinder: SCHWAIGER, Martin, 82490 Farchant (DE); MISCHITZ, Christian, 8045 Graz (AT); HOLESCH, Sascha, 84513 Töging (DE); GANDHI, Kandarp, 85354 Freising (DE)
(74) Vertreter: Weickmann & Weickmann PartmbB

(56) Entgegenhaltungen:
- WO-A1-2020/156843
- US-A1- 2015 285 644

## Beschreibung

Die vorliegende Erfindung betrifft ein Verfahren zum Planen einer Route für ein fahrerloses Transportfahrzeug, welches in zwei unterschiedlichen Betriebsmodi betreibbar ist, sowie ein Verfahren und ein System zum Betreiben eines derartigen fahrerlosen Transportfahrzeugs.

Bei fahrerlosen Transportfahrzeugen handelt es sich um autonom oder teilautonom betriebene Fahrzeuge, welche in Logistikeinrichtungen Transportfunktionen erfüllen und welche häufig auch als AGV (automated guided vehicles) bezeichnet werden. Zum Zweck ihrer Fortbewegung sind die fahrerlosen Transportfahrzeuge mit entsprechenden Antrieben sowie Steuervorrichtungen ausgerüstet, die es ihnen ermöglichen, entlang bestimmter Routen oder Pfade zu fahren, beispielsweise um Wege zwischen zwei Stationen zurückzulegen, an denen ein Beladen bzw. Entladen des entsprechenden Transportfahrzeugs durchgeführt werden kann. Weiterhin sind derartige fahrerlose Transportfahrzeug in der Regel mit Sensoren ausgestattet, welche einerseits Sicherheitsfunktionen erfüllen und andererseits zur Orientierung der Fahrzeuge beitragen, beispielsweise Laserscanner und/oder Time-of-Flight (TOF)-Kameras.

Für die Planung der angesprochenen Pfade sind im Stand der Technik im Wesentlichen zwei unterschiedliche Ansätze verfolgt worden, zum einen ein Vorgeben exakt geplanter Routen innerhalb der genannten Logistikeinrichtung, die von den fahrerlosen Transportfahrzeugen strikt zu befolgen sind, während andererseits ebenfalls die Strategie bekannt ist, lediglich Bereiche vorzugeben, beispielsweise im Zusammenhang mit Knoten und Kanten auf Planungsgraphen, innerhalb welcher die Transportfahrzeuge individuell und dynamisch eine Route planen können, wobei dann beispielsweise eine Abweichung von den entsprechenden Knoten und/oder Kanten im Rahmen einer gewissen Toleranz für die Flurförderzeuge zulässig ist, wodurch die Bereiche in der Praxis definiert sind.

In vielen Fällen ist die zweite genannte Variante aus praktischer Sicht zu bevorzugen, da die Fahrzeuge hierbei in der Regel eine Orientierung an ihrer Umgebung vornehmen und fortlaufend versuchen, einen optimalen oder wenigstens geeigneten Pfad innerhalb eines definierten Fortbewegungsbereichs zu finden, was die Flexibilität und Verfügbarkeit und damit die Effizienz der Logistikeinrichtung verglichen mit fest geplanten Routen verbessern kann. Hierbei können beispielsweise das aktuelle Verkehrsaufkommen und die individuelle Manövrierbarkeit des Fahrzeugs berücksichtigt werden, um einen effizienten und zeitsparenden Pfad zu erzeugen, es können in solchen Szenarien jedoch ebenfalls Situationen auftreten, in welchen eine derartige Strategie ihre Nachteile hat.

Dies kann beispielsweise dann der Fall sein, wenn ein von einem fahrerlosen Transportfahrzeug befahrbarer Fahrweg so schmal ist, dass eine Abweichung innerhalb einer noch so kleinen Toleranz dazu führen könnte, dass Sicherheitssysteme des Fahrzeugs auslösen, beispielsweise da eine Wand oder ein anderes feststehendes Objekt in das Schutzfeld eines Sicherheitsscanners des Transportfahrzeugs eintreten würde, was zu einem Störungszustand des Fahrzeugs führen würde.

Ein Beispiel für ein autonomes Fahrzeug, beispielsweise einen Rasenmäher oder ein landwirtschaftliches Fahrzeug, das in unterschiedlichen Bereichen einer zu überfahrenden Umgebung ein unterschiedliches Verhalten zeigt, ist aus der WO 2020/156843 A1 bekannt. Ein fahrloses Transportfahrzeug ist auch aus der Patentanmeldung US 2015/285644 A1 bekannt.

Es ist somit die Aufgabe der vorliegenden Erfindung, ein verbessertes Verfahren zum Planen einer Route für ein fahrerloses Transportfahrzeug bereitzustellen, mit welchem die genannten Probleme der aus dem Stand der Technik bekannten Verfahren ausgeräumt werden und zu jedem Zeitpunkt eine effiziente und dennoch sichere Fortbewegung eines derartigen Transportfahrzeugs möglich ist.

Zu diesem Zweck wird vorausgesetzt, dass das entsprechende fahrerlose Transportfahrzeug in zwei unterschiedlichen Betriebsmodi betreibbar ist, nämlich einem ersten Betriebsmodus, in welchem das Transportfahrzeug einer fest vorgegebenen Trajektorie folgt, sowie einem zweiten Betriebsmodus, in welchem das Transportfahrzeug einem dynamisch erzeugten Pfad folgt, welcher innerhalb eines vorgegebenen Bewegungsbereichs zu liegen hat. Hierbei umfasst das Verfahren ein Unterteilen einer durch das Transportfahrzeug befahrbaren Umgebung in erste Bereiche, in welchen das Transportfahrzeug in dem ersten Betriebsmodus zu betreiben ist, sowie zweite Bereiche, in welchen das Transportfahrzeug in dem zweiten Betriebsmodus zu betreiben ist, für jeden der ersten Bereiche ein Definieren einer entsprechenden von dem Transportfahrzeug zu befahrenden Trajektorie und für jeden der zweiten Bereiche ein Definieren eines entsprechenden vorgegebenen Bewegungsbereichs.

Auf diese Weise kann der für die Bewegung des Transportfahrzeugs zur Verfügung stehende Raum in einer geeigneten Weise derart unterteilt werden, dass Bereiche definiert werden, in welchen fest vorgegebenen Trajektorien zu folgen ist, beispielsweise in den oben bereits angedeuteten Abschnitten, in welchen ein lediglich sehr kleiner Raum zur Bewegung des Transportfahrzeugs zur Verfügung steht, oder beispielsweise auch im Bereich einer Einfahrt und/oder Ausfahrt aus anzufahrenden Stationen, während in anderen Bereichen, in welchen derartige Einschränkungen nicht gelten, gemäß dem zweiten Betriebsmodus eine Bewegung innerhalb des vorgegebenen Bewegungsbereichs erlaubt wird. Auf diese Weise können die Vorteile der beiden eben genannten Betriebsmodi in einer Weise kombiniert werden, die zu jedem Zeitpunkt einen effizienten und sicheren Betrieb eines entsprechenden fahrerlosen Transportfahrzeugs ermöglicht.

Hierbei ist der Begriff des "dynamisch erzeugten Pfads" derart zu verstehen, dass anhand eines entsprechenden vorgegebenen Bewegungsbereichs durch eine Steuereinheit während der Laufzeit des Transportfahrzeugs ein derartiger Pfad anhand vorgegebener Kriterien erstellt wird, beispielsweise anhand eines Ausführens von Optimierungsalgorithmen bezogen auf eine vorausgesagte Fahrzeit oder einen zurückzulegenden Weg. Ferner versteht sich, dass die Begriffe der "ersten und zweiten Bereiche" nicht derart zu verstehen sind, dass in der Tat jeweils eine Mehrzahl derartiger Bereiche in einer Umgebung vorliegen muss, vielmehr kann erfindungsgemäß auch lediglich ein erster und/oder ein zweiter Bereich in der zu unterteilenden Umgebung vorgesehen werden.

Hierbei kann für jeden Übergang zwischen einem ersten Bereich und einem zweiten Bereich das Verfahren ferner ein Definieren eines Übergangspunkt oder Übergangsbereichs derart umfassen, dass ein stetiger Übergang zwischen dem ersten Betriebsmodus und dem zweiten Betriebsmodus möglich ist. Dies bezieht sich insbesondere darauf, dass das fahrerlose Transportfahrzeug ohne anzuhalten oder ohne zusätzliche Strecken zurücklegen zu müssen mit minimalem Zeitverlust von dem ersten Betriebsmodus in den zweiten Betriebsmodus und umgekehrt übergehen kann. Hierzu kann beispielsweise nicht nur gefordert werden, dass das Fahrzeug einen festen Übergangspunkt anfährt, an welchem der Wechsel von dem einen in den anderen Betriebsmodus vorgenommen wird, sondern dass in diesem Punkt auch eine vorgegebene räumliche Orientierung bzw. Fahrtrichtung des Fahrzeugs verlangt wird, um unmittelbar auf eine an diesem Übergangspunkt beginnende fest vorgegebene Trajektorie in der hierzu notwendigen Ausrichtung übergehen zu können. Ferner kann ebenfalls gefordert werden, dass das Fahrzeug mit einer vorgegebenen Geschwindigkeit an dem Übergangspunkt eintrifft, beispielsweise mit einem vorgegebenen festen Geschwindigkeitswert oder einer Geschwindigkeit, welche unterhalb einer vorgegebenen Maximalgeschwindigkeit liegt.

Wie bereits weiter oben angedeutet, kann das Definieren der Trajektorien der ersten Bereiche oder das Definieren der vorgegebenen Bewegungsbereiche der zweiten Bereiche mithilfe von Knoten und Kanten anhand an sich bekannter Grafenverfahren durchgeführt werden. Insbesondere können hierbei die vorgegebenen Bewegungsbereiche in den zweiten Bereichen anhand von Toleranzbereichen um Kanten und Knoten herum definiert werden, indem bestimmte maximale Abstände von den Kanten und Knoten zugelassen werden. Selbstverständlich wären jedoch auch beliebige andere Parametrisierungen eines möglichen Bewegungsbereichs denkbar, beispielsweise das reine Definieren von befahrbaren Flächen und Start- und Endpunkten des zurückzulegenden Weges.

Weiterhin betrifft die vorliegende Erfindung ein Verfahren zum Betreiben eines fahrerlosen Transportfahrzeugs, welches einerseits ein Durchführen des eben beschriebenen Verfahrens zum Planen einer Route bei einem zentralen Server umfasst, wobei Daten erzeugt werden, welche die durch das Transportfahrzeug befahrbare Umgebung repräsentieren, sowie ein Übertragen der Daten an das fahrerlose Transportfahrzeug und ein Betreiben des fahrerlosen Transportfahrzeugs derart, dass es in den ersten Bereichen der entsprechenden fest vorgegebenen Trajektorie folgt, und dass es in den zweiten Bereichen dynamisch einen Pfad erzeugt, dem es daraufhin folgt.

Hierbei kann das Verfahren zum Betreiben des fahrerlosen Transportfahrzeugs ferner ein Erfassen der Umgebung des Transportfahrzeugs mittels wenigstens einer Sensoreinheit während des Betriebs des Transportfahrzeugs umfassen, wobei die derart aufgenommenen Informationen bei der dynamischen Pfaderzeugung berücksichtigt werden. Auf diese Weise wird das fahrerlose Transportfahrzeug in die Lage versetzt, in Echtzeit auf Änderungen in seiner Betriebsumgebung reagieren zu können und in einer dynamischen Weise stets einen effizienten Pfad zu erzeugen, welcher beispielsweise hinsichtlich einer Minimierung einer voraussichtlichen Fahrtdauer oder zurückzulegenden Strecke optimiert werden kann.

Wenngleich in den ersten Bereichen mit ihren vorgegebenen Trajektorien eine derartige Erfassung der Umgebung des Transportfahrzeugs nicht dahingehend verwendet werden kann, dass der von dem Transportfahrzeug zurückzulegende Pfad angepasst wird, so können die Daten der wenigstens einen Sensoreinheit jedoch auch in diesen ersten Bereichen für andere Zwecke verwendet werden, beispielsweise eine Fehlererkennung oder das Feststellen von Hindernissen, welche eine Fahrt auf der vorgegebenen festen Trajektorie unmöglich machen würden und somit einen Eingriff eines menschlichen Bedieners erfordern. Weiterhin kann in diesem Zusammenhang beispielsweise ebenfalls die Funktionalität implementiert sein, dass bei einem derartigen Feststellen eines Hindernisses in einem ersten Bereich automatisch eine Anpassung der Geschwindigkeit vorgenommen wird, ggf. bis zu einem vollständigen Stoppen des Fahrzeugs, ohne dass hierbei die vorgegebene Trajektorie verlassen wird.

Gemäß einem weiteren Aspekt betrifft die vorliegende Erfindung ein System zum Betreiben eines fahrerlosen Transportfahrzeugs gemäß einem derartigen Verfahren, umfassend einen zentralen Server, welcher dazu eingerichtet ist, ein Durchführen des erfindungsgemäßen Verfahrens zum Planen einer Route zu ermöglichen, sowie das entsprechende fahrerlose Transportfahrzeug, welches dazu eingerichtet ist, die von dem zentralen Server erzeugten Daten zu empfangen und in sowohl dem ersten als auch dem zweiten Betriebsmodus betrieben zu werden.

Hierbei kann die Übertragung der Daten von dem zentralen Server zu dem fahrerlosen Transportfahrzeug beispielsweise über eine drahtlose Kommunikationsverbindung stattfinden, was beispielsweise eine Anpassung der Daten auch während eines laufenden Betriebs des Transportfahrzeugs ermöglichen würde, oder die entsprechenden Daten können bei einer Inbetriebnahme oder einer Überholung des Transportfahrzeugs mittels eines Datenträgers lokal dort aufgespielt werden.

Wie bereits angedeutet, kann dem Transportfahrzeug wenigstens eine Sensoreinheit zum Erfassen seiner Umgebung zugeordnet sein, wobei die durch diese wenigstens eine Sensoreinheit aufgenommenen Daten in der oben beschriebenen Weise für die dynamische Erzeugung eines zurückzulegenden Pfads in dem zweiten Betriebsmodus sowie insgesamt für eine Erkennung von Hindernissen und Störungen verwendet werden können.

Weitere Merkmale und Vorteile der vorliegenden Erfindung werden aus der nachfolgenden Beschreibung einer Ausführungsform davon noch deutlicher, wenn diese zusammen mit den beiliegenden Figuren betrachtet wird. Diese zeigen im Einzelnen:
- Figur 1: eine schematische Darstellung eines erfindungsgemäßen Systems zum Betreiben eines fahrerlosen Transportfahrzeugs;
- Figur 2: ein Flussdiagramm zum Veranschaulichen eines Verfahrens zum Betreiben des fahrerlosen Transportfahrzeugs aus Figur 1; und
- Figur 3: eine schematische Darstellung einer durch das Transportfahrzeug aus der Figur 1 befahrbaren Umgebung.

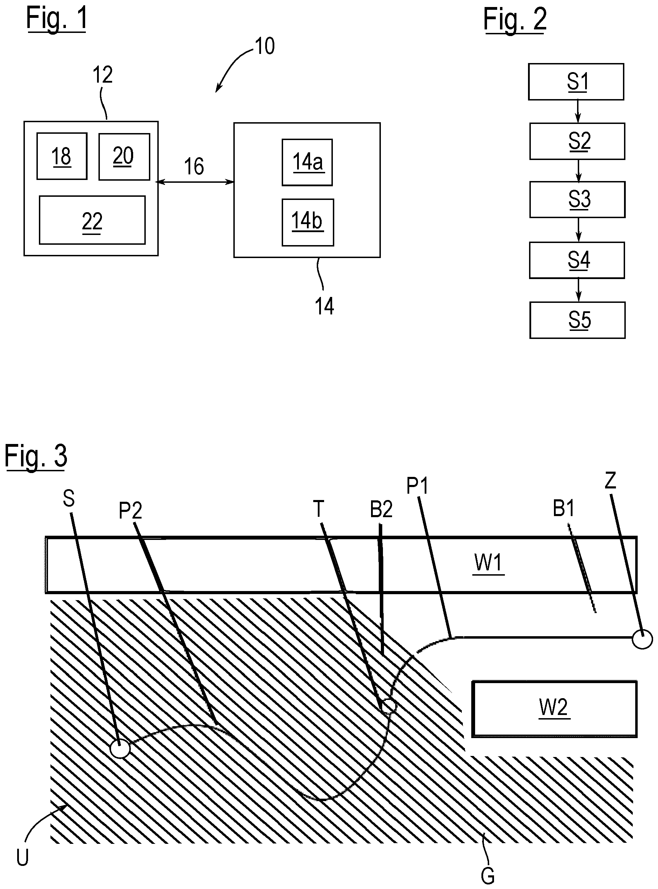

In Figur 1 ist zunächst einmal rein schematisch ein System zum Betreiben eines fahrerlosen Transportfahrzeugs dargestellt und ganz allgemein mit dem Bezugszeichen 10 bezeichnet. Hierbei umfasst das System einen zentralen Server 12 sowie das eigentliche fahrerlose Transportfahrzeug 14 mit einer eigenen Steuereinheit 14a und wenigstens einer Sensoreinheit 14b. Die Sensoreinheit 14b kann für eine Überwachung der Umgebung des Transportfahrzeugs 14 zur Einhaltung von Sicherheitsvorgaben und/oder zur Orientierung des Transportfahrzeugs 14 eingerichtet sein. Hierbei stehen ferner der Server 12 und das Transportfahrzeug 14 miteinander in Datenverbindung, beispielsweise über einen drahtlosen Kommunikationskanal, der durch das Bezugszeichen 16 angedeutet ist.

Weiterhin ist dem zentralen Server 12 neben einem Speicher 18 und einer Prozessoreinheit 20 auch noch eine Benutzerschnittstelle 22 zugeordnet, welche beispielsweise aus einem Touchscreen oder einer Kombination eines Bildschirms mit einer Tastatur und/oder weiteren Eingabegeräten gebildet sein kann. Mittels der Benutzerschnittstelle 22 wird einem menschlichen Benutzer des zentralen Servers ermöglicht, im Rahmen des in Figur 2 dargestellten und weiter unten beschriebenen Verfahrens eine Routenplanung für das fahrerlose Transportfahrzeug 14 vorzunehmen, wobei eine mögliche Darstellung zur Visualisierung dieser Routenplanung an der Benutzerschnittstelle 22 in Figur 3 wiedergegeben ist und ebenfalls weiter unten beschrieben wird.

Die in diesem Zusammenhang hinsichtlich der ausgeführten Routenplanung erzeugten Daten können anschließend über den Kommunikationskanal 16 an das Flurförderzeug 14 übertragen werden, welches dann gemäß der beiden Betriebsmodi unter Steuerung durch die Steuereinheit 14a Wege in der entsprechenden Umgebung zurücklegen kann.

Unter Bezugnahme auf das Flussdiagramm aus Figur 2 soll nun das erfindungsgemäße Verfahren zum Betreiben des fahrerlosen Transportfahrzeugs verdeutlicht werden, welches zunächst einmal ein Verfahren zum Planen einer Route für das fahrerlose Transportfahrzeug 14 umfasst. Zu diesem Zweck wird bei Schritt S1 zunächst einmal eine befahrbare Umgebung, beispielsweise eine Logistikeinrichtung, vorgegeben oder erstellt, welche den gesamten Raum repräsentiert, für welchen Routen für das Transportfahrzeug 14 infrage kommen, und welche beispielsweise anfahrbare Stationen oder andere Wegmarken enthalten kann.

Anschließend wird bei Schritt S2 eine Unterteilung der befahrbaren Umgebung in erste Bereiche und zweite Bereiche vorgenommen, wobei das Transportfahrzeug in den ersten Bereichen fest vorgegebenen Trajektorien zu folgen hat und in den zweiten Bereichen einem dynamisch erzeugten Pfad folgen soll, welcher innerhalb eines vorgegebenen Bewegungsbereichs zu liegen hat und somit eine erhöhte Flexibilität hinsichtlich einer Optimierung einer Fahrtzeit, einem Ausweichen von Hindernissen und ähnlichem bietet.

Dementsprechend können bei Schritt S3, welcher nachfolgend oder gleichzeitig mit Schritt S2 stattfinden kann, entsprechende feste Trajektorien und vorgegebene Bewegungsbereiche definiert werden, wobei diese Planung beispielsweise anhand von Graphen mithilfe von Kanten und Knoten durchgeführt werden kann. Des Weiteren können in Schritt S3 Übergangspunkte oder Übergangsbereiche definiert werden, in welchen jeweilige Übergänge zwischen ersten und zweiten Bereichen und somit zwischen dem ersten und zweiten Betriebsmodus des fahrerlosen Transportfahrzeugs 14 stattfinden sollen.

Auf Grundlage der Unterteilung der befahrbaren Umgebung in erste und zweite Bereiche sowie das Definieren der zu befahrenden Trajektorien bzw. vorgegebenen Bewegungsbereiche erzeugt nun der zentrale Server 12 bei Schritt S4 für das Flurförderzeug 14 verwendbare Daten, welche bei ebenfalls bei Schritt S4 zu dem Transportfahrzeug 14 beispielsweise mittels drahtloser Kommunikation oder über einen entsprechenden Datenträger übertragen werden und von diesem für eine weitere Verwendung durch die Steuereinheit 14a gespeichert und vorgehalten werden.

Anschließend ist in Schritt S5 das fahrerlose Transportfahrzeug 14 mit allen für einen regulären Betrieb notwendigen Daten ausgestattet und es kann in gewohnter Weise dazu betrieben werden, innerhalb der befahrbaren Umgebung Transportaufgaben wahrzunehmen, wozu es in seinen ersten und zweiten Betriebsmodi in entsprechenden ersten und zweiten Bereichen der definierten Umgebung Pfade zurücklegt. Hierbei werden insbesondere in dem zweiten Betriebsmodus solche Pfade dynamisch während der Laufzeit des Transportfahrzeugs 14 mithilfe der Steuereinheit 14a auf Grundlage der der Verfügung stehenden Daten erzeugt, wobei ferner mittels wenigstens der Sensoreinheit 14b erfasste Informationen über die Umgebung des Transportfahrzeugs 14 herangezogen werden.

Zuletzt sei unter Bezugnahme auf Figur 3 und die dort gezeigte schematische Darstellung einer Betriebsumgebung U des Flurförderzeugs 14 erläutert, wie die Pfadplanung in einem konkreten Beispiel visualisierbar ist. Hierbei sind in der Umgebung U zwei Wände W1 und W2 enthalten, welche unüberwindbare Hindernisse für das fahrerlose Transportfahrzeug 14 darstellen und folglich nicht befahrbare Bereiche definieren, während andererseits ein befahrbarer Untergrund in Figur 3 mit dem Bezugszeichen G bezeichnet ist.

In dem in Figur 3 illustrierten Beispiel besteht die Aufgabe darin, das Flurförderzeug 14 von einem Startpunkt S zu einem Zielpunkt Z zu führen, wobei dieser Zielpunkt Z zwischen den beiden Wänden W1 und W2 liegt und der dorthin befahrbare Korridor so schmal ist, dass eine dynamische Pfadplanung an dieser Stelle zu Problemen führen würde.

Dementsprechend wird in dem erfindungsgemäßen Verfahren eine Unterteilung des befahrbaren Untergrunds G der Umgebung U in einen ersten Bereich B1 und einen in Figur 3 schraffiert dargestellten Bereich B2 vorgenommen, wobei in dem ersten Bereich B1 das Transportfahrzeug 14 der festen Trajektorie P1 zu folgen hat, während in dem zweiten Bereich B2 zunächst einmal die gesamte schraffierte Fläche für eine Bewegung des Transportfahrzeugs 14 zulässig ist, so dass in dem illustrierten Beispiel der zweite Bereiche B2 mit einem vorgegebenen Bewegungsbereich identisch ist. In anderen Beispielen könnte ein vorgegebener Bewegungsbereich jedoch auch nur auf einem Teil eines zweiten Bereichs vorliegen, beispielsweise wenn in diesem Knoten und Kanten eines Graphen definiert werden und der entsprechende Bewegungsbereich innerhalb einer vorgegebenen Toleranz davon zu liegen hat.

Hierbei ist ferner ein Übergangspunkt T definiert worden, in welchem der eigentliche Übergang zwischen dem zweiten Betriebsmodus und dem ersten Betriebsmodus des Transportfahrzeugs 14 bei einem Zurücklegen des Wegs von dem Startpunkt S zu dem Zielpunkt Z stattfinden soll. Dementsprechend wird von dem Transportfahrzeug 14 bei einem Start der Fahrt im Startpunkt S zunächst einmal dynamisch anhand vorgegebener Kriterien und Algorithmen ein Pfad zum Übergangspunkt T dynamisch erzeugt, welcher im hier gezeigten Beispiel mit P2 bezeichnet ist und für welchen prinzipiell der gesamte Bereich B2 infrage kommt.

Am Übergangspunkt T geht das Transportfahrzeug 14 nunmehr auf die feste Trajektorie P1 über und folgt dieser anschließend möglichst präzise und ohne Abweichung bis zum Zielpunkt Z, um in dem schmalen Korridor zwischen den beiden Wänden W1 und W2 in sicherer Weise und mit ausreichenden Abständen eine problemlose Fortbewegung durchführen zu können, während keine Warnungen oder Störungen durch Sicherheitssysteme, wie beispielsweise die Sensoreinheit 14b, ausgegeben werden.

Bei einer entgegengesetzten Bewegung vom Punkt Z zum Punkt S kann dementsprechend eine analoge Fahrt in umgekehrter Weise stattfinden, das heißt zunächst einmal ein Folgen der Trajektorie P1 von dem Punkt Z zu dem Übergangspunkt T und anschließend eine dynamische Erzeugung eines Pfads P2 im zweiten Bereich B2 und ein Folgen dieses Pfads.

## Patentansprüche

1. Verfahren zum Planen einer Route für ein fahrerloses Transportfahrzeug (14), welches in zwei unterschiedlichen Betriebsmodi betreibbar ist:
- einem ersten Betriebsmodus, in welchem das Transportfahrzeug (14) einer fest vorgegebenen Trajektorie (P1) folgt, und
- einem zweiten Betriebsmodus, in welchem das Transportfahrzeug (14) einem dynamisch erzeugten Pfad (P2) folgt, welcher innerhalb eines vorgegebenen Bewegungsbereichs (B2) zu liegen hat;
das Verfahren umfassend:
- Unterteilen einer durch das Transportfahrzeug (14) befahrbaren Umgebung (U) in erste Bereiche (B1), in welchen das Transportfahrzeug (14) in dem ersten Betriebsmodus zu betreiben ist, und zweite Bereiche (B2), in welchen das Transportfahrzeug in dem zweiten Betriebsmodus zu betreiben ist (S2);
- für jeden der ersten Bereiche (B1), Definieren einer entsprechenden von dem Transportfahrzeug (14) zu befahrenden Trajektorie (P1) (S3); und
- für jeden der zweiten Bereiche (B2), Definieren eines entsprechenden vorgegebenen Bewegungsbereichs (B2) (S3).

2. Verfahren nach Anspruch 1,
ferner umfassend, für jeden Übergang zwischen einem ersten Bereich (B1) und einem zweiten Bereich (B2), Definieren eines Übergangspunkts (T) oder Übergangsbereichs derart, dass ein stetiger Übergang zwischen dem ersten Betriebsmodus und dem zweiten Betriebsmodus möglich ist (S3).

3. Verfahren nach einem der vorhergehenden Ansprüche,
wobei das Definieren der Trajektorien (P1) der ersten Bereiche (B1) und/oder das Definieren der vorgegebenen Bewegungsbereiche (B2) der zweiten Bereiche (B2) mithilfe von Knoten und Kanten durchgeführt wird.

4. Verfahren nach Anspruch 3,
wobei die vorgegebenen Bewegungsbereiche (B2) anhand von Toleranzbereichen um Kanten und Knoten herum definiert werden.

5. Verfahren zum Betreiben eines fahrerlosen Transportfahrzeugs (14), umfassend:
- Durchführen des Verfahrens zum Planen einer Route nach einem der vorhergehenden Ansprüche bei einem zentralen Server (12), wobei Daten erzeugt werden, welche die durch das Transportfahrzeug (14) befahrbare Umgebung (U) repräsentieren;
- Übertragen der Daten an das fahrerlose Transportfahrzeug (14) (S4); und
- Betreiben des fahrerlosen Transportfahrzeugs (14) derart, dass es in den ersten Bereichen (B1) der entsprechenden fest vorgegebenen Trajektorie (P1) folgt und dass es in den zweiten Bereichen (B2) dynamisch einen Pfad (P2) erzeugt, welchem es daraufhin folgt (S5).

6. Verfahren nach Anspruch 5,
ferner umfassend ein Erfassen der Umgebung (U) des Transportfahrzeugs (14) mittels wenigstens einer Sensoreinheit (14b) während des Betriebs des Transportfahrzeugs (14), wobei die derart aufgenommenen Informationen bei der dynamischen Pfaderzeugung berücksichtigt werden.

7. System (10) zum Betreiben eines fahrerlosen Transportfahrzeugs (14) gemäß einem Verfahren nach einem der Ansprüche 5 und 6, umfassend:
- einen zentralen Server (12), welcher dazu eingerichtet ist, ein Durchführen des Verfahrens zum Planen einer Route nach einem der Ansprüche 1 bis 4 zu ermöglichen;
- das fahrerlose Transportfahrzeug (14), welches dazu eingerichtet ist, die von dem zentralen Server (12) erzeugten Daten zu empfangen und in sowohl dem ersten als auch dem zweiten Betriebsmodus betrieben zu werden.

8. System (10) nach Anspruch 7,
wobei eine drahtlose Kommunikationsverbindung (16) für eine Übertragung der Daten von dem zentralen Server (12) zu dem fahrerlosen Transportfahrzeug (14) vorgesehen ist.

9. System (10) nach Anspruch 7 oder 8,
wobei eine Anpassung der Daten während eines laufenden Betriebs des Transportfahrzeugs (14) ermöglicht ist.

10. System (10) nach einem der Ansprüche 7 bis 9,
wobei dem Transportfahrzeug (14) wenigstens eine Sensoreinheit (14b) zum Erfassen seiner Umgebung (U) zugeordnet ist.

## Claims

1. Method for planning a route for a driverless transport vehicle (14) which can be operated in two different operating modes:
- a first operating mode in which the transport vehicle (14) follows a firmly predetermined trajectory (P1), and
- a second operating mode in which the transport vehicle (14) follows a dynamically generated path (P2) which should lie within a predetermined range of movement (B2);
the method comprising:
- dividing surroundings (U) which can be travelled by the transport vehicle (14) into first regions (B1), in which the transport vehicle (14) should be operated in the first operating mode, and second regions (B2), in which the transport vehicle should be operated in the second operating mode (S2);
- for each of the first regions (B1), defining a corresponding trajectory (P1) to be travelled by the transport vehicle (14) (S3); and
- for each of the second regions (B2), defining a corresponding predetermined range of movement (B2) (S3).

2. Method according to Claim 1,
further comprising, for each transition between a first region (B1) and a second region (B2), defining a transition point (T) or transition region in such a manner that a continuous transition between the first operating mode and the second operating mode is possible (S3).

3. Method according to any one of the preceding claims,
wherein the definition of the trajectories (P1) of the first regions (B1) and/or the definition of the predetermined ranges of movement (B2) of the second regions (B2) is performed using nodes and edges.

4. Method according to Claim 3,
wherein the predetermined ranges of movement (B2) are defined on the basis of tolerance ranges around edges and nodes.

5. Method for operating a driverless transport vehicle (14), comprising:
- performing the method for planning a route according to any one of the preceding claims in a central server (12), wherein data are generated which represent the surroundings (U) through which the transport vehicle (14) can travel;
- transmitting the data to the driverless transport vehicle (14) (S4); and
- operating the driverless transport vehicle (14) in such a manner that it, in the first regions (B1), follows the corresponding firmly predetermined trajectory (P1) and that it, in the second regions (B2), dynamically generates a path (P2) which it subsequently follows (S5).

6. Method according to Claim 5,
further comprising recording the surroundings (U) of the transport vehicle (14) by means of at least one sensor unit (14b) during the operation of the transport vehicle (14), wherein the information recorded in such a manner is taken into account in the dynamic path generation.

7. System (10) for operating a driverless transport vehicle (14) according to a method according to any one of Claims 5 and 6, comprising:
- a central server (12) which is configured to enable the method for planning a route according to any one of Claims 1 to 4 to be performed;
- the driverless transport vehicle (14) which is configured to receive the data generated by the central server (12) and to be operated in both the first and the second operating mode.

8. System (10) according to Claim 7,
wherein a wireless communication connection (16) for a transmission of data from the central server (12) to the driverless transport vehicle (14) is provided.

9. System (10) according to Claim 7 or 8,
wherein an adjustment of the data is enabled during ongoing operation of the transport vehicle (14).

10. System (10) according to any one of Claims 7 to 9,
wherein at least one sensor unit (14b) for recording the surroundings (U) of the transport vehicle (14) is assigned to the transport vehicle (14).

## Revendications

1. Procédé pour planifier un itinéraire pour un véhicule de transport (14) sans conducteur, lequel peut fonctionner dans deux modes de fonctionnement différents :
- un premier mode de fonctionnement, dans lequel le véhicule de transport (14) suit une trajectoire (P1) prédéfinie de façon ferme, et
- un deuxième mode de fonctionnement, dans lequel le véhicule de transport (14) suit un chemin (P2) généré de façon dynamique, lequel doit se situer à l'intérieur d'une zone de déplacement (B2) prédéfinie ;
le procédé comprenant :
- la division d'un environnement (U) pouvant être parcouru par le véhicule de transport (14) en premières zones (B1), dans lesquelles le véhicule de transport (14) est destiné à fonctionner dans le premier mode de fonctionnement, et en deuxièmes zones (B2), dans lesquelles le véhicule de transport est destiné à fonctionner dans le deuxième mode de fonctionnement (S2) ;
- pour chacune des premières zones (B1), la définition d'une trajectoire (P1) correspondante destinée à être parcourue par le véhicule de transport (14) (S3) ; et
- pour chacune des deuxièmes zones (B2), la définition d'une zone de déplacement (B2) prédéfinie correspondante (S3).

2. Procédé selon la revendication 1,
comprenant en outre, pour chaque passage entre une première zone (B1) et une deuxième zone (B2), la définition d'un point de passage (T) ou zone de passage, de telle sorte qu'un passage continu entre le premier mode de fonctionnement et le deuxième mode de fonctionnement est possible (S3).

3. Procédé selon l'une quelconque des revendications précédentes,
dans lequel la définition des trajectoires (P1) des premières zones (B1) et/ou la définition des zones de déplacement (B2) prédéfinies des deuxièmes zones (B2) est mise en œuvre à l'aide de nœuds et d'arêtes.

4. Procédé selon la revendication 3,
dans lequel les zones de déplacement (B2) prédéfinies sont définies à l'aide de plages de tolérance autour d'arêtes et de nœuds.

5. Procédé pour faire fonctionner un véhicule de transport (14) sans conducteur, comprenant :
- la mise en œuvre du procédé pour planifier un itinéraire selon l'une quelconque des revendications précédentes dans le cas d'un serveur central (12), dans lequel des données sont générées, lesquelles représentent l'environnement (U) pouvant être parcouru par le véhicule de transport (14) ;
- la transmission des données au véhicule de transport (14) sans conducteur (S4) ; et
- le fonctionnement du véhicule de transport (14) sans conducteur de telle sorte que dans les premières zones (B1) il suit la trajectoire (P1) correspondante prédéfinie de manière ferme et que dans les deuxièmes zones (B2) il génère un chemin (P2) de façon dynamique, qu'il suit après cela (S5).

6. Procédé selon la revendication 5,
comprenant en outre une détection de l'environnement (U) du véhicule de transport (14) au moyen d'au moins une unité de détection (14b) pendant le fonctionnement du véhicule de transport (14), dans lequel les informations enregistrées de la sorte sont prises en compte lors de la génération dynamique du chemin.

7. Système (10) pour faire fonctionner un véhicule de transport (14) sans conducteur selon un procédé selon l'une quelconque des revendications 5 et 6, comprenant :
- un serveur central (12), lequel est conçu pour permettre une mise en œuvre du procédé pour planifier un itinéraire selon l'une quelconque des revendications 1 à 4 ;
- le véhicule de transport (14) sans conducteur, lequel est conçu pour recevoir les données générées par le serveur central (12) et pour fonctionner aussi bien dans le premier que dans le deuxième mode de fonctionnement.

8. Système (10) selon la revendication 7,
dans lequel une liaison de communication sans fil (16) pour une transmission des données à partir du serveur central (12) vers le véhicule de transport (14) sans conducteur est prévue.

9. Système (10) selon la revendication 7 ou 8,
dans lequel une adaptation des données pendant un fonctionnement en cours du véhicule de transport (14) est permise.

10. Système (10) selon l'une quelconque des revendications 7 à 9,
dans lequel au moins une unité de détection (14b) est associée au véhicule de transport (14) pour la détection de l'environnement (U) de celui-ci.
